# EUROPEAN PATENT APPLICATION

(11) **EP 1 467 370 A2**
(43) Date of publication of application: **13.10.2004**
(21) Application number: 04008432.9
(22) Date of filing: 07.04.2004
(51) Int. Cl.: G11B 27/00

(54) **Apparatus, method, and recording medium comprising program for reproducing information**

(30) Priority: 08.04.2003 JP 2003104267
(71) Applicant: Pioneer Corporation, Tokyo-to (JP)
(72) Inventor: Watanabe, Hideo, Yamada Kawagoe-shi Saitama-ken (JP); Watanabe, Koji, Yamada Kawagoe-shi Saitama-ken (JP); Morimoto, Mitsutoshi, Yamada Kawagoe-shi Saitama-ken (JP); Endo, Fumio, Yamada Kawagoe-shi Saitama-ken (JP)
(74) Representative: Grünecker, Kinkeldey, Stockmair & Schwanhäusser Anwaltssozietät

(57) **Abstract**

An information reproducing apparatus (S) for reproducing at least one of specific reproduction information (TR6, TR7) , which needs a releasing process in reproducing the specific reproduction information (TR6, TR7), and reproduction information (TR1, TR2, TR3, TR4, TR5) other than the specific reproduction information (TR6, TR7) from a recording medium (100) on which the specific reproduction information (TR6, TR7) and the reproduction information (TR1, TR2, TR3, TR4, TR5) are recorded, characterized in that the information reproducing device (S) is provided with: a releasing device (16) which performs the releasing process in response to a release command input from the outside during the reproduction of the reproduction information or before the reproduction of the reproduction information, after the recording medium (100) is loaded on the information reproducing device (s) ; and a reproducing device (16) which reproduces the specific reproduction information after the releasing process is performed.

## Description

### BACKGROUND OF THE INVENTION

### 1.Field of the Invention

The present invention relates to an information reproducing apparatus, an information reproducing method, an information reproducing program, and an information recording medium, and more particularly, to an information reproducing apparatus and an information reproducing method for reproducing at least one of specific reproduction information, on which a reproduction releasing process is to be performed in reproducing the same, and reproduction information to be reproduced other than the specific reproduction information from a recording medium, on which the specific reproduction information and the reproduction information are recorded, an information reproducing program for reproducing information , and an information recording medium on which the information reproducing program is recorded.

### 2.Related Art

Digital versatile discs (DVDs) having a recording capacity several times that of the conventional compact discs (CDs) have recently been generalized. A plurality of pieces of music, as well as moving pictures that amount to a movie, can be recorded on a DVD. The DVDs, on which music, the main information to be reproduced, and character information representing the lyrics for the music are recorded, are referred to as DVD audios.

Special music that can be reproduced only by performing a reproduction releasing process for inputting special information, such as a reproduction releasing key, as well asmusic that canbe reproduced by a DVD player without performing any special process, is recorded on the conventional DVD audios.

At this time, the special music is commonly referred to as a bonus track. More specifically, for example, in the case of a DVD audio onwhichmusic of a certain singer is recorded, only the listeners who join the singer's fan club obtain the reproduction releasing key and, using reproduction releasing key, may release the reproduction prevention state of the bonus track to thus listen to the bonus track. The reproduction releasing key may be used in order to reproduce the advertising video (referred to as the promotion video) of the music recorded on the DVD audio.

In common DVD audios, the bonus tracks can be reproduced only by performing the reproduction releasing process after the reproduction of music pieces other than the bonus tracks is completed. The music pieces other than the bonus tracks are referred to as common music pieces.

However, according to the above-mentioned conventional DVD audios, the reproduction releasing process for reproducing the bonus tracks can be performed only after the reproduction of common music pieces is completed. Thus,in order to reproduce the bonus tracks, it is necessary to start the necessary reproduction releasing process after the reproduction of the common music pieces is completed.

In particular, in cases where the DVD audio is reproduced by a vehicle-mounted DVD player, when the reproduction of the common music pieces is completed during the driving of the vehicle, the necessary reproduction releasing process must be performed after stopping the vehicle. Also, since it may not be possible to stop the vehicle when it is time to perform the reproduction releasing process, that is, it is time to reproduce the bonus track, it is not possible to reproduce the bonus track due to the loss of timing. Therefore, the vehicle-mounted DVD player lacks convenience.

In order to solve the above problems, it is an object of the present invention to provide an information reproducing apparatus and an information reproducing method capable of smoothly resuming the reproduction of the bonus track even when it is expected that the reproduction releasing process cannot be performed, due to certain circumstances, at the time of reproducing the bonus track after the reproduction of the common music pieces is completed, an information reproducing program for reproducing information, and an information recording medium on which the information reproducing program is recorded.

### SUMMARY OF THE INVENTION

The above object of the present invention can be achieved by an information reproducing apparatus of the present invention. The information reproducing apparatus for reproducing at least one of specific reproduction information, which needs a releasing process in reproducing the specific reproduction information, and reproduction information other than the specific reproduction information from a recording medium on which the specific reproduction information and the reproduction information are recorded, the information reproducing device is provided with: a releasing device which performs the releasing process in response to a release command input from the outside during the reproduction of the reproduction information or before the reproduction of the reproduction information, after the recording medium is loaded on the information reproducing device; and a reproducing device which reproduces the specific reproduction information after the releasing process is performed.

According to the present invention, when it is determined that the reproduction releasing process is performed, the reproduction releasing process is performed based on the input collation code, and the bonus tracks are reproduced after the reproduction releasing process is performed. Therefore, it is possible to perform a necessary reproduction releasing process even before the original reproduction timing of the bonus tracks in a DVD. In addition, even if it is expected that the reproduction releasing process cannot be performed at the reproduction timing due to certain circumstances, it is possible to previously perform the reproduction releasing process to thus smoothly start the reproduction of the bonus tracks.

In one aspect of the present invention can be achieved by the information reproducing apparatus of the present invention. The information reproducing apparatus is further provided with a determining device which determines whether the releasing process is performed based on the release command, wherein the releasing device performs the releasing process in response to the release command when it is determined that the releasing process is performed.

According to the present invention, when it is determined that the reproduction releasing process is performed, the reproduction releasing process is performed based on the input collation code, and the bonus tracks are reproduced after the reproduction releasing process is performed. Therefore, it is possible to perform a necessary reproduction releasing process even before the original reproduction timing of the bonus tracks in a DVD. In addition, even if it is expected that the reproduction releasing process cannot be performed at the reproduction timing due to certain circumstances, it is possible to previously perform the reproduction releasing process to thus smoothly start the reproduction of the bonus tracks.

In another aspect of the present invention can be achieved by the information reproducing apparatus of the present invention. The information reproducing apparatus of the present invention is, wherein when the releasing process is performed, the reproducing device reproduces the specific reproduction information after completing the reproduction of the reproduction information.

According to the present invention, when the reproduction releasing process is previously performed, in the case of performing the reproduction of the bonus tracks after completing the reproduction of the music pieces, it is possible to reproduce the bonus tracks without performing the reproduction releasing process again after completing the reproduction of the music pieces.

In further aspect of the present invention can be achieved by the information reproducing apparatus of the present invention. The information reproducing apparatus of the present invention is, when the releasing process is performed, the reproducing device reproduces the specific reproduction information subsequently to the reproduction of the reproduction information.

According to the present invention, when the reproduction releasing process is previously performed, in the case of performing the reproduction of the bonus tracks subsequently to the reproduction of the music pieces, it is possible to continuously reproduce the bonus tracks without performing the reproduction releasing process again after completing the reproduction of the music pieces.

In further aspect of the present invention can be achieved by the information reproducing apparatus of the present invention. The information reproducing apparatus of the present invention is, wherein the reproducing device reproduces the specific reproduction information immediately after the releasing process is performed.

According to the present invention, when the bonus tracks are reproduced immediately after performing the reproduction releasing process, it is possible to immediately and rapidly reproduce the bonus tacks when the user desires to do so.

In further aspect of the present invention can be achieved by the information reproducing apparatus of the present invention. The information reproducing apparatus of the present invention is, wherein the reproducing device is prohibited from reproducing the specific reproduction information when it is not determined that the releasing process is performed during the reproduction of the reproduction information or before the reproduction of the reproduction information.

According to the present invention, when it is not determined that the reproduction releasing process is performed during the reproduction of the music pieces, the reproduction of the bonus tracks is prohibited. Thus, it is possible to conveniently reproduce the bonus tracks while ensuring the secrecy of the bonus tracks.

In further aspect of the present invention can be achieved by the information reproducing apparatus of the present invention. The information reproducing apparatus of the present invention, is further provided with a detecting device which detects the release information from the recording medium, wherein a release information required for the releasing process is recorded on the recording medium and the determining device determines whether the releasing process is performed by collating the detected release information with the input release command.

According to the present invention, it is determined whether the reproduction releasing process is performed by collating the contents of the disc collation code detected from the DVD with the contents of the inputted input collation code. Thus, it is possible to reliably determine whether the reproduction releasing process is performed and to thus ensure the confidentiality of the bonus tracks.

In further aspect of the present invention can be achieved by the information reproducing apparatus of the present invention. The information reproducing apparatus of the present invention is further provided with an inputting device which inputs the release command in accordance with display contents of the command input screen, wherein the determining device displays a command input screen used for inputting the release command.

According to the present invention, it is possible to display the collation code input screen and to input an input collation code in accordance with the display contents. Thus, it is possible to input the input collation code using a simple and visible method and to thus perform there production releasing process.

In further aspect of the present invention can be achieved by the information reproducing apparatus of the present invention. The information reproducing apparatus of the present invention is wherein the specific reproduction information is reproduced only for users who know the contents of the release command corresponding to the specific reproduction information.

According to the present invention, the bonus tracks are reproduced only for the users, such as fan club members, who know the contents of the input collation code corresponding to the bonus tracks. Thus, it is possible to conveniently reproduce the bonus tracks and to increase the number of sales of a DVD.

The above obj ect of the present invention can be achieved by an information reproducing method of the present invention. The information reproducing method for reproducing at least one of specific reproduction information, which needs a releasing process in reproducing the specific reproduction information, and reproduction information other than the specific reproduction information from a recording medium on which the specific reproduction information and the reproduction information are recorded, the information reproducing method is provided with: a releasing step of performing the releasing process in response to a release command input from the outside during the reproduction of the reproduction information or before the reproduction of the reproduction information, after the recording medium is loaded on the information reproducing device; and a reproducing step of reproducing the specific reproduction information after the releasing process is performed.

According to the present invention, when it is determined that the reproduction releasing process is performed, the reproduction releasing process is performed based on the input collation code, and the bonus tracks are reproduced after the reproduction releasing process is performed. Therefore, it is possible to perform a necessary reproduction releasing process even before the original reproduction timing of the bonus tracks in a DVD. In addition, even if it is expected that the reproduction releasing process cannot be performed at the reproduction timing due to certain circumstances, it is possible to previously perform the reproduction releasing process to thus smoothly start the reproduction of the bonus tracks.

The above object of the present invention can be achieved by an information reproducing program of the present invention. The information reproducing program embodied in a recording medium which can be read by a computer in an information reproducing apparatus for reproducing at least one of specific reproduction information, which needs a releasing process in reproducing the specific reproduction information, and reproduction information other than the specific reproduction information from a recording medium on which the specific reproduction information and the reproduction information are recorded, the program making the computer function as: an releasing device which performs the releasing process in response to a release command input from the outside during the reproduction of the reproduction information or before the reproduction of the reproduction information, after the recording medium is loaded on the information reproducing device; and an reproducing device which reproduces the specific reproduction information after the releasing process is performed.

According to the present invention, when it is determined that there production releasing process is performed, the reproduction releasing process is performed based on the input collation code, and the bonus tracks are reproduced after the reproduction releasing process is performed. Therefore, it is possible to perform a necessary reproduction releasing process even before the original reproduction timing of the bonus tracks in a DVD. In addition, even if it is expected that the reproduction releasing process cannot be performed at the reproduction timing due to certain circumstances, it is possible to previously perform the reproduction releasing process to thus smoothly start the reproduction of the bonus tracks.

The above object of the present invention can be achieved by an information recording medium of the present invention. The information recording medium in which an information reproducing program is recorded in a readable way by a recording computer included in an information reproducing apparatus for reproducing at least one of specific reproduction information, which needs a releasing process in reproducing the specific reproduction information, and reproduction information other than the specific reproduction information from a recording medium on which the specific reproduction information and the reproduction information are recorded, the information reproducing program causing the recording computer to function as: an releasing device which performs the releasing process in response to a release command input from the outside during the reproduction of the reproduction information or before the reproduction of the reproduction information, after the recording medium is loaded on the information reproducing device; and an reproducing device which reproduces the specific reproduction information after the releasing process is performed.

According to the present invention, when it is determined that the reproduction releasing process is performed, the reproduction releasing process is performed based on the input collation code, and the bonus tracks are reproduced after the reproduction releasing process is performed. Therefore, it is possible to perform a necessary reproduction releasing process even before the original reproduction timing of the bonus tracks in a DVD. In addition, even if it is expected that the reproduction releasing process cannot be performed at the reproduction timing due to certain circumstances, it is possible to previously perform the reproduction releasing process to thus smoothly start the reproduction of the bonus tracks.

### BRIEF DESCRIPTION OF THE DRAWINGS

FIG. 1 is a block diagram illustrating a schematic structure of an information reproducing apparatus according to an embodiment;
FIG. 2 is a schematic view illustrating a recording aspect of music pieces according to the embodiment;
FIG. 3 is a flow chart illustrating a reproducing process according to the embodiment;
FIG. 4 is a flow chart illustrating a preceding release standby process according to the embodiment;
FIG. 5 is a schematic view illustrating a first aspect of reproducing the music pieces according to the embodiment;
FIG. 6 is a schematic view illustrating a second aspect of reproducing the music pieces according to the embodiment; and
FIG. 7 is a schematic view illustrating a third aspect of reproducing the music pieces according to the embodiment.

### DESCRIPTION OF THE PREFERRED EMBODIMENTS

The operation and benefit of the invention will be made clear from embodiments described as below.

A preferred embodiment according to the present invention will now be described with reference to the accompanying drawings.

According to the following embodiment, the present application applies to DVD players capable of reproducing information (including moving picture information that accompanies voice) recorded on other kinds of DVDs as well as the above-mentioned DVD audios.

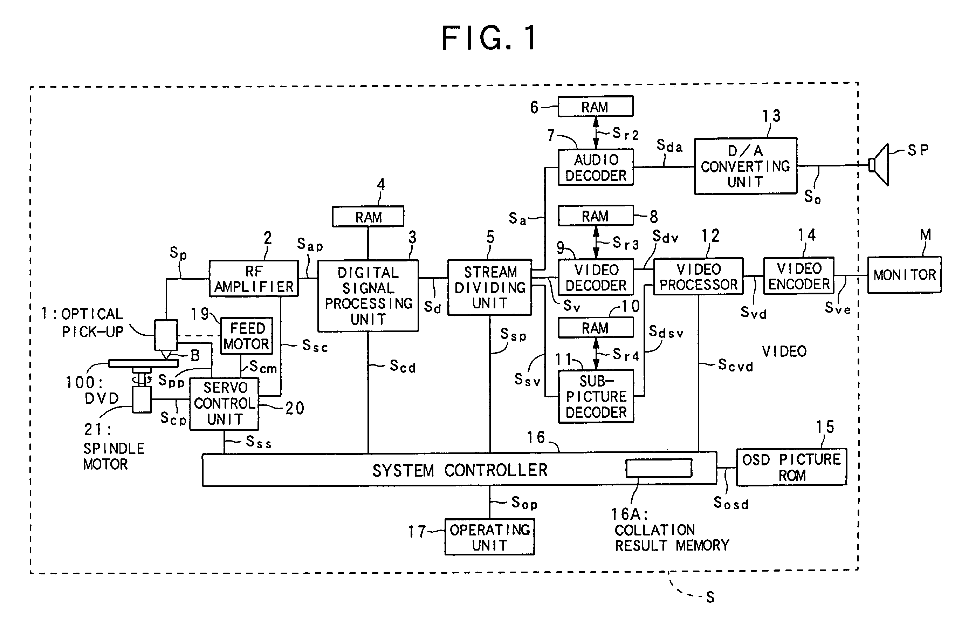

The schematic structure and operation of the DVD player according to the present embodiment will now be described with reference to FIG. 1. FIG. 1 is a block diagram illustrating the schematic structure of the DVD player.

As illustrated in FIG. 1, a DVD player S according to the embodiment includes an optical pick-up 1, functioning as detecting device, a radio frequency (RF) amplifier 2, a digital signal processing unit 3, random access memories (RAMs) 4, 6, 8, and 10, a stream dividing unit 5, an audio decoder 7, functioning as reproducing device, a video decoder 9, a sub-picture decoder 11, a video processor 12, a digital-to-analog (D/A) converting unit 13, a video encoder 14, an on screen display (OSD) picture read only memory (ROM) 15, a system controller 16 including a non-volatile collation result memory 16A, functioning as identifying and releasing device, an operating unit 17, a feed motor 19, a servo control unit 20, and a spindle motor 21.

The operation of the DVD player S will now be described.

In the case of reproducing the information recorded on a DVD 100, first, the DVD 100 is loaded in the DVD player S so as to fix to a rotating shaft of the spindle motor 21, and the spindle motor 21 rotates the DVD 100 at a predetermined number of rotations based on a control signal Scp, which will be described later, from the servo control unit 20.

The optical pick-up 1 radiates a reproducing beam B having a predetermined intensity onto the rotating DVD 100, receives reflection light from the DVD 100, generates a detection signal Sp that changes in accordance with a change in intensity of the reflection light, and outputs the detection signal Sp to the RF amplifier 2.

At this time, the collecting position (that is, the focusing position) of the beam B on the DVD 100, which is vertical to an information recording surface of the DVD 100 , is controlled by driving an object lens (not shown) in the direction vertical to the information recording surface of the DVD 100 by a focus actuator (not shown) in the optical pick-up 1 based on a control signal Spp, which will be described later, from the servo control unit 20.

In addition, the collecting position (that is, the tracking position) of the beam B on the DVD 100, which is parallel to the information recording surface of the DVD 100, is controlled by driving the object lens in the direction parallel to the information recording surface of the DVD 100 by a tracking actuator (not shown) in the optical pick-up 1 based on the control signal Spp.

When it is necessary to move the tracking position in the radius direction of the DVD 100, beyond the range in which the tracking position can be controlled by the tracking actuator (for example, when a so-called track jump is performed) , the feed motor 19, which moves a carriage (not shown) for supporting the optical pick-up 1 so as to be movable in the radius direction of the DVD 100, is driven based on a control signal Scm, which will be described later, from the servo control unit 20 to move the carriage, thereby moving the tracking position in the radius direction of the DVD 100.

The RF amplifier 2 amplifies the detection signal Sp in a predetermined amplification ratio, generates an amplification signal Sap, outputs the amplification signal Sap to the digital signal processing unit 3. In addition, the RF amplifier 2 generates an error signal Ssc used for various servo controls and outputs the error signal Ssc to the servo control unit 20.

Therefore, the servo control unit 20 generates the control signals Scp, Spp, and Scm for servo control based on the control signal Sss and the error signal Ssc from the system controller 16 and outputs the control signals Scp, Spp, and Scm to the spindle motor 21, the optical pick-up 1, and the feed motor 19, respectively.

Then, the digital signal processing unit 3 digitalizes the amplification signal Sap while receiving a control signal Scd from the system controller 16, performs a predetermined digitalizing process, such as a filtering process, on the digitalized amplification signal Sap, generates a digital amplification signal Sd, and outputs the digital amplification signal Sd to the stream dividing unit 5. At this time, information required for performing the digitalizing process is temporarily stored in a RAM 4 as a memory signal Sr1, is read from the RAM 4 as the memory signal Sr1, as necessary, and is provided to the digitalizing process.

The stream dividing unit 5 separates voice information, picture information, and sub-picture information from the digital amplification signal Sd while receiving the control signal Ssp from the system controller 16, outputs the voice information to the audio decoder 7 as voice information Sa, outputs the picture information to the video decoder 9 as picture information Sv, and outputs the sub-picture information to the sub-picture decoder 11 as sub-picture information Ssv.

At this time, more specifically, when the DVD 100 is a DVD on which a movie is recorded, the picture information is a moving picture corresponding to the movie. The voice information is voice or sound effects corresponding to the moving picture. The sub-picture information corresponds to subtitles in the movie. When the DVD 100 is a DVD audio, the voice information is music, including information such as songs of a singer or accompaniments. The picture information is moving pictures corresponding to music pieces. The sub-picture information is character information representing the lyrics to the music pieces. When the DVD 100 is a DVD audio on which only voice information is recorded, the picture information Sv and the sub-picture information Ssv are not separated from each other.

Then, the audio decoder 7 decodes the voice information Sa, generates decoded voice information Sda that is digital information, and outputs the decoded voice information Sda to the D/A converting unit 13. At this time, information required for performing the decoding process is temporarily stored in a RAM 6 as a memory signal Sr2, is read from the RAM 6 as the memory signal Sr2, as necessary, and is provided for the decoding process.

The D/A converting unit 13 converts the decoded voice information Sda into analog signals and outputs the analog signals to an external speaker SP as output voice information So.

Therefore, sound corresponding to the output voice information So is emitted from the speaker SP.

The video decoder 9 decodes the image information Sv, generates decoded picture information Sdv that is digital information, and outputs the decoded picture information Sdv to the video processor 12. At this time, information required for performing the decoding process is temporarily stored in the RAM 8 as a memory Sr3, is read from the RAM 8 as the memory signal Sr3, as necessary, and is provided for the decoding process.

The sub-picture decoder 11 decodes the sub-picture information Ssv, generates decoded sub-picture information Sdsv that is digital information, and outputs the decoded sub-picture information Sdsv to the video processor 12. At this time, information required for performing the decoding process is temporarily stored in the RAM 10 as a memory signal Sr4, is read from the RAM 10as the memory signal Sr4 , asnecessary, and is provided for the decoding process.

On the other hand, still picture information, such as an information screen required for displaying pictures, is read from the OSD picture ROM 15 that previously stores the original picture for forming the still picture information, as necessary, and is output to the system controller 16 as original picture information Sosd. Then, the system controller 16 forms required still picture information using the original picture information Sosd, generates still picture information Scvd including the formed still picture information, and outputs the still picture information Scvd to the video processor 12.

Therefore, the video processor 12 composes the decoded picture information Sdv, the decoded sub-picture information Sdsv, and the still picture information Scvd, as necessary, generates display picture information Svd as pictures to be displayed, and outputs the display picture information Svd to the video encoder 14. When at least one of the decoded picture information Sdv, the decoded sub-picture information Sdsv, and the still picture information Scvd as well as all of the decoded picture information Sdv, the decoded sub-picture information Sdsv, and the still picture information Scvd are input, the video processor 12 composes one or more input picture information items and outputs the composed information items to the video encoder 14 as the display picture information Svd.

The video encoder 14 modulates the input display picture information Svd in a predetermined manner, converts the format of the picture included in the display picture information Svd into a format, which can be displayed on a monitor M, to generate converted picture information Sve, and outputs the converted picture information Sve to the monitor M. In this way, the monitor M displays the picture included in the converted picture information Sve.

Operation by a user, which is required for controlling the above-mentioned operations, is performed using the operating unit 17 that comprises a remote controller, etc. The operating unit 17 generates an operation signal Sop representing the contents of the performed operations and outputs the operation signal Sop to the system controller 16.

Then, the system controller 16 generates the control signals Scd and Ssp for controlling the operation of the respective members based on the operation signal Sop and outputs the control signals Scd and Ssp to the digital signal processing unit 3 and the stream dividing unit 5, respectively.

In addition to the above, the system controller 16 generates the control signal Sss and outputs the control signal Sss to the servo control unit 20 such that the servo control unit 20 generates and outputs the control signals Scp, Spp, and Scm for servo control.

In addition, the system controller 16 mainly controls the collation result memory 16A included therein, the digital signal processing unit 3, the stream dividing unit 4, and the servo control unit 20 to thus perform the reproducing process according to the embodiments that will be described later.

Then, a reproducing process according to an embodiment, in which the music pieces recorded on the DVD 100 are reproduced when the DVD 100 is a DVD audio, will be described with reference to FIGS. 1 to 7.

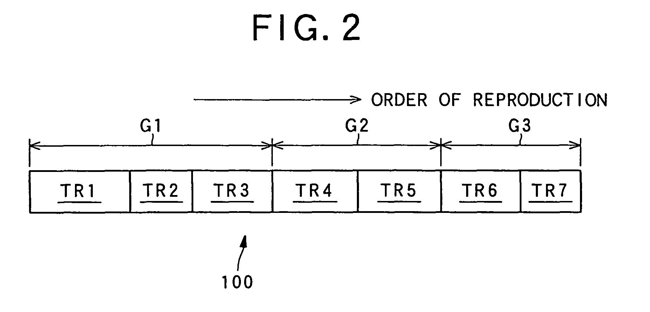

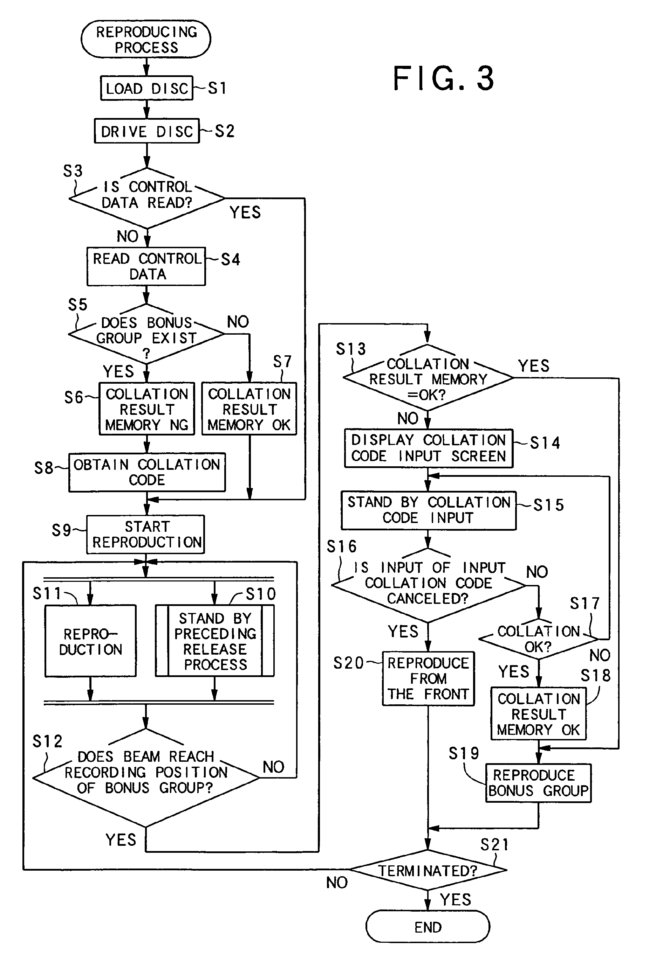

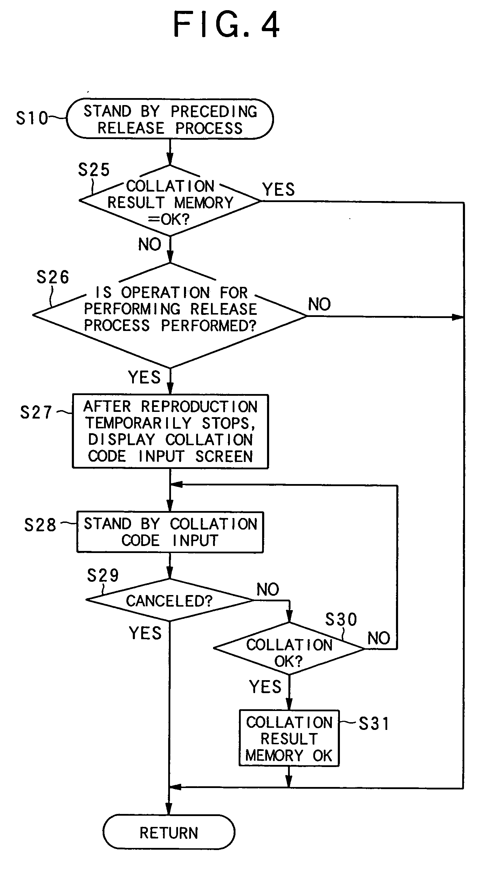

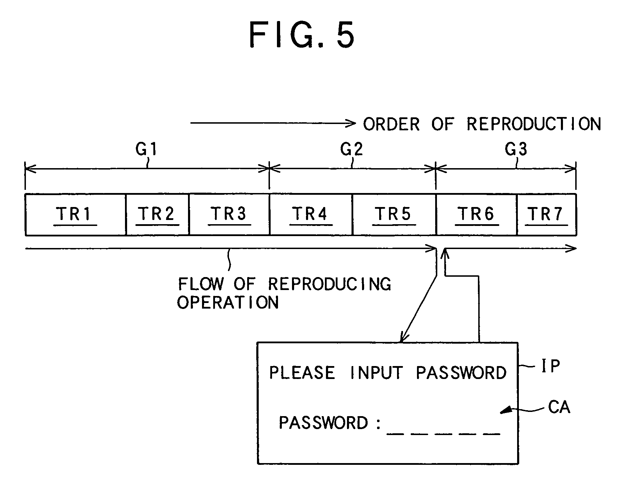

FIG. 2 is a schematic diagram illustrating a recording aspect of the music pieces recorded on the DVD 100 according to the present embodiment. FIG. 3 is a flow chart illustrating the entire structure of the reproducing process according to the present embodiment. FIG. 4 is a flow chart illustrating the reproducing process in detail. FIGS. 5 to 7 are schematic diagrams illustrating actual aspects of reproducing music pieces in the reproducing process.

According to the embodiment described hereinafter, as illustrated in FIG. 2, it is premised that five music pieces (music pieces TR1 to TR5 in the order of reproduction) and two bonus tracks (bonus tracks TR6 and TR7 in the order of reproduction) are previously recorded on the DVD 100 as a DVD audio. At this time, a track group G1 is composed of the music pieces TR1 to TR3 among the music pieces TR1 to TR5. A track group G2 is composed of the music pieces TR4 and TR5. A bonus group G3 is composed of the bonus tracks TR6 and TR7. Herein, one group is composed of the music pieces composed by a composer or sung by a singer.

The above-mentioned reproduction releasing process is performed on the bonus tracks TR6 and TR7 included in the bonus group G3 to reproduce the bonus tracks. That is, the reproduction releasing process is performed on the bonus group G3 recorded on the DVD 100, which has an encrypted access code, so that the bonus tracks TR6 and TR7 included in the bonus group G3 are reproducible when it is determined that a collation code previously recorded on the DVD 100 (hereinafter, referred to as a disc collation code) coincides with a collation code input from the operating unit 17 (hereinafter, referred to as an input collation code) during a reproducing process that will be described later, thereby performing reproduction.

As illustrated in FIG. 3, in the reproducing process according to the present embodiment, when the DVD 100 (in which seven music pieces are previously recorded as mentioned above) , as a DVD audio, is loaded on the DVD player S (step S1), the DVD 100 is rotated by the spindle motor 21 (step S2). Then, it is determined whether control data (including attribute information representing whether the bonus group G3 is recorded on the DVD 100 and identification information for distinguishing the currently loaded DVD 100 from other DVDs), as control information recorded on the DVD 100, was previously read and is recorded in a memory (not shown) in the system controller 16 (step S3).

When it is determined in step S3 that the DVD 100 was reproduced by the DVD player S, even once, and the control data is already recorded as a result (step S3; YES) , the process proceeds to step S9 that will be described later. When it is determined in the step S3 that the control data is not recorded (step S3; NO) , it is determined that the DVD 100 is reproduced by the DVD player S for the first time. Then, the control data is read from the DVD 100 (step S4).

It is determined whether the bonus group G3 is recorded on the DVD 100 based on the contents of the read control data (step S5). When it is determined that the bonus group G3 is recorded (step S5; YES), information representing that the collation results in the reproduction releasing process, which will be described later, do not coincide with each other (hereinafter, referred to as non-coincidence information) is stored in the collation result memory 16A in which information representing whether the collation results in the reproducing process coincide with each other is to be recorded (step S6) . Then, the disc collation code recorded in apredetermined region on the DVD 100 is detected and obtained (step S8), and reproduction starts from the music piece TR1 (step S9).

Meanwhile, when it is determined in step S5 that the bonus group G3 is not recorded (step S5; NO), information representing that the collation results coincide with each other (hereinafter, referred to as coincidence information, and in this case, it is determined that all of the music pieces recorded on the DVD 100 are common music pieces) is stored in the collation result memory 16A (step S7). Then, the process proceeds to step S9.

When reproduction starts from the music piece TR1 in step S9, the music piece TR1 and the music pieces TR2 to TR5 following the music piece TR1 are subsequently reproduced (step S11) , and at the same time, the reproduction releasing process is previously performed (step S10) . As descried later, the reproduction releasing process of step S10 is previously performed during the reproduction of one of the music pieces TR1 to TR5, and then either coincidence information or non-coincidence information is stored in the collation result memory 16A. The reproduction releasing process of step S10 will be described in detail with reference to FIG. 4.

While the music pieces TR1 to TR5 are reproduced (step S11), it is monitored whether a beam B is radiated onto a position of the DVD 100, on which the bonus group G3 is recorded, after the reproduction of the music pieces TR1 to TR5 is completed (step S12). When the beam B is still not radiated onto the position of DVD 100 (step S12; NO), the process returns to the step immediately preceding steps S10 and S11 in order to reproduce the music pieces TR1 to TR5 and to perform the preceding reproduction releasing process on the music pieces TR1 to TR5. When the beam B is radiated onto the portion of DVD 100 on which the bonus group G3 is recorded (step S12; YES), it is determined whether coincidence information is stored in the collation result memory 16A (step S13).

When coincidence information is recorded in the collation result memory 16A, that is, when the bonus group G3 is originally not recorded on the DVD 100 (refer to step S5; NO and step S7) or the reproduction prohibition of the bonus group G3 is released (step S13; YES) by performing the preceding reproduction releasing process (refer to step S10) , the bonus tracks TR6 and TR7 included in the bonus group G3 are reproduced (step S19), and the process proceeds to step S21 that will be described later.

Meanwhile, when it is determined in step S13 that non-coincidence information is still recorded in the collation result memory 16A, that is, when the reproduction releasing process on the bonus group G3 is still not performed (step S13; NO) although the bonus group G3 exists (refer to step S5; YES and step S6) , a collation code input screen for urging the input of the input collation code in order to performing the reproduction releasing process again is displayed on the monitor M (step S14 ), and it stands by until the input collation code is input through the operating unit 17 (step S15).

During the standby state, it is monitored whether an operation for canceling the input of the input collation code is performed by the operating unit 17 (step S16). When the canceling operation is performed or when the input process (step S15) is not performed although a predetermined time has passed (step S16; YES) , the process returns to the music piece TR1 without reproducing the bonus tracks TR6 and TR7 and starts to reproduce subsequent music pieces TR2 to TR5 (step S20).

Then, it is determined whether the operation for terminating the reproducing process is performed by the operating unit 17 (step S21). As a result, when the operation for terminating the reproducing process is not performed, the process returns to steps S10 and S11 in order to continuously perform the current reproducing process. On the other hand, when the operation for terminating the reproducing process is performed (step S21; YES) , the reproducing process by the DVD player S is terminated.

When it is determined in step S16 that the canceling operation is not performed and that the input collation code is input (step S16; NO) , the contents of the input collation code and the contents of the disc collation code obtained in step S8 are collated with each other, and it is determined whether the contents of the input collation code coincide with the contents of the disc collation code (step S17). When the contents of the input collation code do not coincide with the contents of the disc collation code (step S17; NO) , which means that the inputted input collation code is not used for the reproduction releasing process, such non-coincidence of the contents of the input collation code and the contents of the disc collation code is notified to the user, and the process returns to step S15 to thus stand by until a new input collation code is input.

In the meantime, when the contents of the inputted input collation code coincide with the contents of the disc collation code (step S17, YES), which means that the reproduction releasing process can be performed, coincidence information is stored in the collation result memory 16A (step S18). Then, the process proceeds to step S19 to thus reproduce the bonus tracks TR6 and TR7 in the bonus group G3, and then the process proceeds to step S21.

Subsequently, the preceding reproduction releasing process of step S10 will be described in detail with reference to FIG. 4.

As illustrated in FIG. 4, in the preceding reproduction releasing process, it is determined whether coincidence information is stored in the collation result memory 16A (step S25).

When coincidence information is recorded in the collation result memory 16A, that is, when the bonus group G3 is originally not recorded on the DVD 100 (refer to step S5; NO and step S7) or when the reproduction prohibition of the bonus group G3 is released by the previously performed reproduction releasing process (step S25; YES), the process proceeds to step S12 as illustrated in FIG. 3.

Meanwhile, when it is determined in step S25 that non-coincidence information is still recorded in the collation result memory 16A, that is, when the reproduction releasing process on the bonus group G3 is still not performed (step S25; NO) although the bonus group G3 exists (refer to step S5; YES and step S6) , it is determined whether the user operates the operating unit 17 to perform the reproduction releasing process (step S26) . As a result, when the operation for performing the reproduction releasing process is not performed (step S26; NO) , the process proceeds to step S12 as illustrated in FIG. 3. When the operation for performing the reproduction releasing process is performed (step S26; YES) , the collation code input screen, which will be described later, is displayed on the monitor M while continuously reproducing the music pieces TR1 to TR5 (step S27), and it stands by until the input collation code is input through the operating unit 17 (step S28).

During the standby state, it is monitored whether the operation for canceling the input process is performed through the operating unit 17 (step S29) . When the canceling operation is performed or the input process (step S28) is not performed although a predetermined time has passed (step S29; YES) , the process proceeds to step S12 illustrated in FIG. 3.

When it is determined in step S29 that the input collation code is input without performing the canceling operation (step S29; NO), the contents of the input collation code and the contents of the disc collation code are collated with each other, and it is determined whether the contents of the input collation code coincide with the contents of the disc collation code (step S30). When the contents of the input collation code do not coincide with the contents of the disc collation code(step S30 ; NO),which means that the in putted input collation code is not used for the reproduction releasing process, the process returns to step S28, and it stands by until a new input collation code is input.

In the meantime, when the contents of the inputted input collation code coincide with the contents of the disc collation code (step S30; YES) , which means that the reproduction releasing process can be performed, coincidence information is stored in the collation result memory 16A (step S31) , and the process proceeds to step S12 illustrated in FIG. 3.

Detailed reproduction aspects, in which the music pieces TR1 to TR5 and the bonus tracks TR6 and TR7 are reproduced in accordance with the afore mentioned series of reproducing operations, will be described with reference to FIGS. 5 to 7.

A first aspect will be described with reference to FIG. 5. According to the first aspect, the above-mentioned preceding reproduction releasing process is not performed.

When the bonus track G3 is recorded on the DVD 100 and the above-mentioned preceding reproduction releasing process is not performed, that is, when the operation for releasing reproduction is not performed by the user in step S26 shown in FIG. 4 (step S26; NO) , when the input process on the input collation code is canceled, or when the input process (step S28) is not performed although a predetermined time has passed (refer to step S29; YES), the music pieces TR1 to TR5 are sequentially reproduced in accordance with the predetermined reproduction order as illustrated in FIG. 5. When the beam B is radiated onto a portion on the DVD 100 on which the bonus group G3 is recorded (refer to step S12; YES of FIG. 3) , the above-mentioned collation code input screen IP including an input column CA for inputting an input collation code is displayed on the monitor M (refer to step S14 of FIG. 3). At this time, reproduction is in a pause state.

When an input collation code is input (refer to step S16; NO of FIG. 3) and the input collation code coincides with the disc collation code (refer to step S17; YES of FIG. 3), the process proceeds to the step of reproducing the bonus tracks TR6 and TR7 in the bonus group G3 (refer to step S19 of FIG. 3) to thus complete a series of reproducing processes.

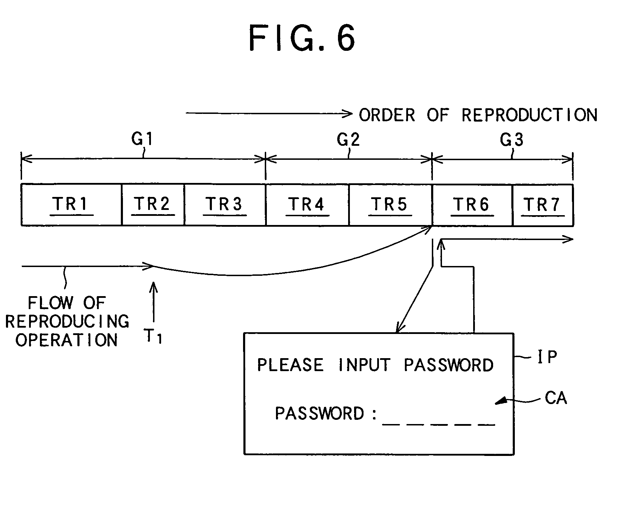

Then, a second aspect will be described with reference to FIG. 6. According to the second aspect, the above-mentioned preceding reproduction releasing process is not performed, and the reproduction of the remaining music pieces is canceled during the reproduction of the music pieces TR1 to TR5 to thus subsequently reproduce the bonus tracks TR6 and TR7.

When the bonus track G3 is recorded on the DVD 100 and the above-mentioned preceding reproduction releasing process is not performed, as in the first aspect, the music pieces TR1 to TR5 are sequentially reproduced in accordance with the predetermined reproduction order as illustrated in FIG. 6.

When an operation for canceling the reproduction of the remaining music pieces and for performing the reproduction of the bonus tracks TR6 and TR7 is performed through the operating unit 17 in accordance with the timing T1 illustrated in FIG. 6, the collation code input screen IP including the input column CA is displayed on the monitor M (refer to step S14 of FIG. 3). At this time, reproduction is in a pause state.

When an input collation code is input (refer to step S16; NO of FIG. 3) and the input collation code coincides with the disc collation code (refer to step S17; YES of FIG. 3) , the bonus tracks TR6 and TR7 in the bonus group G3 are reproduced (refer to step S19 of FIG. 3) to thus complete a series of reproducing processes.

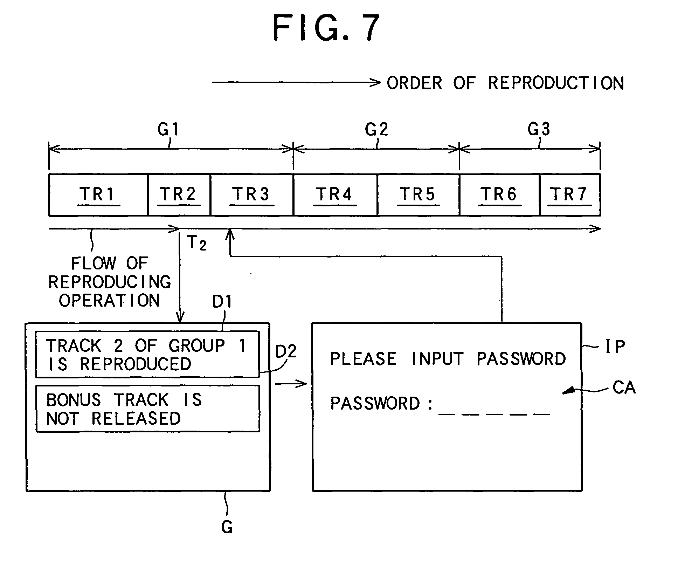

Finally, a third aspect will be described with reference to FIG. 7. According to the third aspect, the above-mentioned preceding reproduction releasing process is performed.

When the bonus track G3 is recorded on the DVD 100 and the above-mentioned preceding reproduction releasing process is performed, as in the first aspect, the music pieces TR1 to TR5 are sequentially reproduced in accordance with the predetermined reproduction order as illustrated in FIG. 7.

When an operation for performing the above-mentioned preceding reproduction releasing process is performed through the operating unit 17 in accordance with the timing T2 illustrated in FIG. 7 (refer to step 526; YES of FIG. 4) , a current status display screen G including a reproduction display portion D1 , on which the currently reproduced music pieces are displayed, and a confirmation display portion D2 for representing whether the reproduction releasing process is currently completed is displayed on the monitor M. In this state, when an operation for selecting the confirmation display portion D2 in the current status display screen G is performed through the operating portion 17, the collation code input screen IP including the input column CA is displayed on the monitor M (refer to step S27 of FIG. 4). At this time, the reproduction of a certain music piece continues.

When an input collation code is input (refer to step S29; NO of FIG. 4) and the input collation code coincides with the disc collation code (refer to step S30; YES of FIG. 4), the remaining music pieces are continuously reproduced (refer to step S12; NO of FIG. 3). After the reproduction of the remaining music pieces is completed (refer to step S12; YES of FIG. 3) , the bonus tracks TR6 and TR7 in the bonus group G3 are reproduced (refer to step S13; YES and step S19 of FIG. 3) to thus complete a series of reproducing processes.

As mentioned above, according to the processes of the DVD player S of the present embodiment, during the reproduction of the music pieces TR1 to TR5, it is determined whether the reproduction releasing process is performed based on the input collation code input from the outside. As a result, when it is determined that the reproduction releasing process is performed, the reproduction releasing process is performed based on the input collation code, and the bonus tracks TR6 and TR7 are reproduced after the reproduction releasing process is performed. Therefore, it is possible to perform a necessary reproduction releasing process even before the original reproduction timing of the bonus tracks TR6 and TR7 in the DVD 100. In addition, even if it is expected that the reproduction releasing process cannot be performed at the reproduction timing due to certain circumstances, it is possible to previously perform the reproduction releasing process to thus smoothly start the reproduction of the bonus tracks TR6 and TR7.

In addition, when the reproduction releasing process is previously performed, in the case of performing the reproduction of the bonus tracks TR6 and TR7 after completing the reproduction of the music pieces TR1 to TR5, it is possible to reproduce the bonus tracks TR6 and TR7 without performing the reproduction releasing process again after completing the reproduction of the music pieces TR1 to TR5.

Furthermore, when the reproduction releasing process is previously performed, in the case of performing the reproduction of the bonus tracks TR6 and TR7 subsequently to the reproduction of the music pieces TR1 to TR5, it is possible to continuously reproduce the bonus tracks TR6 and TR7 without performing the reproduction releasing process again after completing the reproduction of the music pieces TR1 to TR5.

Moreover, when thebonus tracks TR6 and TR7 are reproduced immediately after performing the reproduction releasing process, it is possible to immediately and rapidly reproduce the bonus tacks TR6 and TR7 when the user desires to do so.

In addition, when it is not determined that the reproduction releasing process is performed during the reproduction of the music pieces TR1 to TR5, the reproduction of the bonus tracks TR6 and TR7 is prohibited. Thus, it is possible to conveniently reproduce the bonus tracks TR6 and TR7 while ensuring the secrecy of the bonus tracks TR6 and TR7.

Also, it is determined whether the reproduction releasing process is performed by collating the contents of the disc collation code detected from the DVD 100 with the contents of the inputted input collation code. Thus, it is possible to reliably determine whether the reproduction releasing process is performed and to thus ensure the confidentiality of the bonus tracks TR6 and TR7.

Furthermore, it is possible to display the collation code input screen IP and to input an input collation code in accordance with the display contents. Thus, it is possible to input the input collation code using a simple and visible method and to thus perform the reproduction releasing process.

Moreover, the bonus tracks TR6 and TR7 are reproduced only for the users, such as fan club members, who know the contents of the input collation code corresponding to the bonus tracks TR6 and TR7. Thus, it is possible to conveniently reproduce the bonus tracks TR6 and TR7 and to increase the number of sales of the DVD 100.

In addition, according to the embodiment, although a case where the preceding reproduction releasing process is performed after starting the reproduction of the music pieces TR1 to TR5 (refer to step S9 of FIG. 3) is described, it is possible to perform the reproduction releasing process before starting the reproduction of the music pieces TR1 to TR5 after the disc collation code is obtained (refer to step S8 of FIG. 3). In this case, it is also possible to obtain the above-mentioned effects.

Also, according to the above-mentioned embodiment, although, a case in which the music pieces including the bonus tracks TR6 and TR7 are recorded on the DVD 100 is described, it is possible to apply the present invention to a case in which music pieces including bonus tracks are recorded on, for example, conventional CDs and hard disks.

Furthermore, according to the above-mentioned embodiment, although a case in which the necessary reproduction releasing process is performed after determining whether the reproduction releasing process is performed on the bonus tracks is described, it is possible to previously perform the necessary reproduction releasing process without determining whether the reproduction releasing process is performed.

Moreover, it is possible to record programs corresponding to the flow charts illustrated in FIGS. 3 and 4 in information recording media, such as a flexible disk, a hard disk, and a semiconductor memory, or to obtain the programs through a network such as the Internet, to record the programs in the information recording media, and to read and execute the programs using a general purpose microc omputer. Therefore, the micro computer can function as the system controller 16 according to the embodiment.

It should be understood that various alternatives to the embodiment of the invention described herein may be employed in practicing the invention. Thus, it is intended that the following claims define the scope of the invention and that methods and structures within the scope of these claims and their equivalents be covered thereby.

## Claims

1. An information reproducing apparatus (S) for reproducing at least one of specific reproduction information (TR6, TR7) , which needs a releasing process in reproducing the specific reproduction information (TR6, TR7), and reproduction information (TR1, TR2, TR3, TR4, TR5) other than the specific reproduction information (TR6, TR7) from a recording medium (100) on which the specific reproduction information (TR6, TR7) and the reproduction information (TR1, TR2, TR3, TR4, TR5) are recorded, **characterized in that** the information reproducing device (S) comprises:
a releasing device (16) which performs the releasing process in response to a release command input from the outside during the reproduction of the reproduction information or before the reproduction of the reproduction information, after the recording medium (100) is loaded on the information reproducing device(s); and
a reproducing device (16) which reproduces the specific reproduction information after the releasing process is performed.

2. The information reproducing apparatus (S) according to Claim 1, **characterized in that** the information reproducing apparatus further comprises determining device (16) for determining whether the releasing process is performed based on the release command,
wherein the releasing device (16) performs the releasing process in response to the release command when it is determined that the releasing process is performed.

3. The information reproducing apparatus (S) according to Claim 1 or 2, wherein
when the releasing process is performed, the reproducing device reproduces the specific reproduction information after completing the reproduction of the reproduction information.

4. The information reproducing apparatus (S) according to Claim 1 or 2, wherein
when the releasing process is performed, the reproducing device reproduces the specific reproduction information subsequently to the reproduction of the reproduction information.

5. The information reproducing apparatus (S) according to Claim 1 or 2, wherein
the reproducing device reproduces the specific reproduction information immediately after the releasing process is performed.

6. The information reproducing apparatus (S) according to any one of Claims 2 to 5, wherein
the reproducing device is prohibited from reproducing the specific reproduction information when it is not determined that the releasing process is performed during the reproduction of the reproduction information or before the reproduction of the reproduction information.

7. The information reproducing apparatus (S) according to any one of Claims 2 to 6, **characterized in that** the information reproducing apparatus further comprises a detecting device which detects the release information from the recording medium, wherein
a release information required for the releasing process is recorded on the recording medium and the determining device determines whether the releasing process is performed by collating the detected release information with the input release command.

8. The information reproducing apparatus (S) according to Claim 7, **characterized in that** the information reproducing apparatus further comprises an inputting device which inputs the release command in accordance with display contents of the command input screen, wherein
the determining device displays a command input screen used for inputting the release command.

9. The information reproducing apparatus (S) according to any one of Claims 1 to 8, wherein
the specific reproduction information is reproduced only for users who know the contents of the release command corresponding to the specific reproduction information.

10. An information reproducing method for reproducing at least one of specific reproduction information, which needs a releasing process in reproducing the specific reproduction information, and reproduction information other than the specific reproduction information from a recording medium on which the specific reproduction information and the reproduction information are recorded, **characterized in that** the information reproducing method comprises:
a releasing step of performing the releasing process in response to a release command input from the outside during the reproduction of the reproduction information or before the reproduction of the reproduction information, after the recording medium is loaded on the information reproducing device; and
a reproducing step of reproducing the specific reproduction information after the releasing process is performed.

11. An information recording medium in which an information reproducing program is recorded in a readable way by a recording computer included in an information reproducing device for reproducing at least one of specific reproduction information, which needs a releasing process in reproducing the specific reproduction information, and reproduction information other than the specific reproduction information from a recording medium on which the specific reproduction information and the reproduction information are recorded, **characterized in that** the information reproducing program causing the recording computer to function as:
an releasing device which performs the releasing process in response to a release command input from the outside during the reproduction of the reproduction information or before the reproduction of the reproduction information, after the recording medium is loaded on the information reproducing device; and
an reproducing device which reproduces the specific reproduction information after the releasing process is performed.
